# EUROPÄISCHE PATENTANMELDUNG

(11) **EP 1 087 513 A2**
(43) Veröffentlichungstag der Anmeldung: **28.03.2001**
(21) Anmeldenummer: 00710018.3
(22) Anmeldetag: 25.09.2000
(51) Int. Cl.: H02M 7/48

(54) **Frequenzumrichter für einen Elektromotor**

(30) Priorität: 27.09.1999 DE 19946242
(71) Anmelder: GRUNDFOS A/S, DK-8850 Bjerringbro (DK)
(72) Erfinder: Aerestrup, Jan Caroe, 8850 Bjerringbro (DK)
(74) Vertreter: Vollmann, Heiko, Dipl.-Ing.

(57) **Zusammenfassung**

Der Frequenzumrichter ist für einen Elektromotor (9) vorgesehen und weist einen Gleichrichter (2), einen Zwischenkreis (1b) und einen Wechselrichter (8b) auf, die über einen Steuer- und Regelkreis (12b) schaltungstechnisch verknüpft sind. Im Wechselrichter (8) sind jeder Motorphase mindestens zwei elektronische Schalter (10) zugeordnet, einer für die das höhere Potential führenden Seite( H) und einer für die das niedrigere Potential führenden Seite (2). Der Zwischenkreis (16) ist als aktiver Zwischenkreis ausgebildet und beinhaltet einen Buck-Boost-Converter. Er wird so gesteuert, dass die Spannung am Ausgang des Zwischenkreises (1b) betragsmäßig stets kleiner als die am Eingang ist. Hierdurch können kostengünstige Bauteile im Wechselrichter und insbesondere auch im Steuer- und Regelkreis eingesetzt werden (Figur 4).

## Beschreibung

Der Einsatz von Frequenzumrichtern für Elektromotoren gewinnt zunehmend auch für Motoren kleinerer Leistung an Bedeutung, wobei die Herstellungskosten für den Frequenzumrichter stets noch ein entscheidendes Kriterium für dessen Einsatz bilden. Man ist daher bemüht, den Aufbau eines Frequenzumrichters zu vereinfachen oder so zu wählen, dass Bauteile eingesetzt werden können, die möglichst kostengünstig sind.

Bei Frequenzumrichtern für Elektromotoren unterscheidet man im Wesentlichen zwei Bauarten, nämlich den Puls-Weiten-Modulierten Frequenzumformer (PWM-Frequenzumformer) und den Puls-Amplituden-Modulierten Frequenzumformer (PAM-Frequenzumformer). Beide verändern nicht nur die Frequenz der am Motor anliegenden Spannung, sondern auch die Spannung selbst. Um die Drehzahl des Motors verlustarm steuern zu können und den Motor mit im Wesentlichen konstantem Drehmoment betreiben zu können, müssen nämlich Motorspannung und Motorfrequenz proportional verändert werden.

Frequenzumrichter der PAM-Bauart bestehen im Wesentlichen aus einem Gleichrichter, in dem ein ein- oder mehrphasiger Wechselstrom gleichgerichtet wird, einem Zwischenkreis (auch Gleichspannungszwischenkreis genannt), in dem die konstante Gleichspannung des Gleichrichters mittels eines elektronischen Schalters ein- und ausgeschaltet wird, um so eine betragsmäßig veränderliche Gleichspannung zu erzeugen, einem Wechselrichter und einem Steuer- und Regelkreis. Um die am Ausgang des Gleichrichters anliegende konstante Gleichspannung verändern, insbesondere auch erhöhen zu können, ist innerhalb des Zwischenkreises ein sogenannter Buck-Boost-Converter vorgesehen, der eine Buck-Boost-Gleichrichterdiode sowie den bereits vorerwähnten elektronischen Schalter beinhaltet. Im Wechselrichter wird dann die im Zwischenkreis erzeugte variable Gleichspannung durch elektronische Schalter so mit den Motorwicklungen verbunden, dass durch entsprechende Ansteuerung der Schalter eine frequente Spannungsversorgung des Motors erzielt wird, wobei durch Wahl der Frequenz die Drehzahl des Motors gesteuert wird. Dabei sind jeder Motorphase zwei elektronische Schalter zugeordnet, von denen der eine das höhere Potential (High-Side) und der andere das niedrigere Potential (Low-Side) schaltet, um so für die jeweilige Motorphase eine Wechselspannung zu erzeugen. Die Steuerung der Schalter im Wechselrichter sowie des Schalters im Zwischenkreis erfolgt mittels des Steuer- und Regelkreises, der bei bekannten Frequenzumformern der PAM-Bauart recht aufwendig ist. Die Steuerung ist deshalb so aufwendig, weil sowohl der Schalter des Buck-Boost-Converters als auch üblicherweise zumindest die auf der High-Side des Wechselrichters sitzenden N-dotierten Transistoren so in spannungsführenden Leitungen zurn Motor sitzen, dass sich deren Referenzspannung entsprechend der Motoransteuerung ständig ändert. Da zum Schalten dieser elektronischen Schalter eine Steuerspannung erforderlich ist, die um einen definierten Betrag über der Referenzspannung liegt, muss im Steuer- und Regelkreis für jeden dieser Schalter die Spannung entsprechend nachgeführt werden, was schaltungstechnisch aufwendig ist.

Vor diesem Hintergrund liegt der Erfindung die Aufgabe zugrunde, einen gattungsgemäßen Frequenzumrichter zu verbessern, insbesondere im Hinblick auf die Herstellungskosten.

Diese Aufgabe wird gemäß der Erfindung durch die in Anspruch 1 angegebenen Merkmale gelöst. Vorteilhafte Ausgestaltungen der Erfindung ergeben sich aus den Unteransprüchen sowie der nachfolgenden Beschreibung.

Grundgedanke der vorliegenden Erfindung ist es, den Zwischenkreis so zu steuern, dass die Ausgangsspannung des Zwischenkreises betragsmäßig stets kleiner als die Ausgangsspannung des Gleichrichters ist.

Eine solche Ansteuerung ist ungewöhnlich, da üblicherweise ein aktiver Zwischenkreis, also ein Zwischenkreis mit Buck-Boost-Converter gerade deshalb eingesetzt wird, um die Ausgangsspannung des Zwischenkreises auch über die Ausgangsspannung des Gleichrichters hinaus zu erhöhen. Diese Ansteuerung ermöglicht jedoch den Einsatz kostengünstiger elektronischer Schalter und darüber hinaus einen wesentlich einfacheren Aufbau des Steuer- und Regelkreises.

Die erfindungsgemäße Lösung ermöglicht es, dass der Wechselrichter, was von Vorteil ist, auf der das höhere Potential führenden Seite mit P-dotierten Halbleitern und auf der das niedrigere Potential führenden Seite mit N-dotierten Halbleitern als elektronische Schalter ausgestattet werden kann. Üblicherweise werden bei Wechselrichtern nach dem Stand der Technik nur N-dotierte Halbleiter eingesetzt, da nämlich die P-dotierten Transistoren nur bis ca. 150 Volt einsetzbar sind. Die N-dotierten Halbleiter, die beim Stand der Technik auch auf der High-Side eingesetzt werden, haben nicht nur den Nachteil, dass sie deutlich teurer sind als die P-dotierten, sondern sie haben beim Einsatz auf der High-Side darüber hinaus noch den Nachteil, dass sie so mit der Motorwicklung verbunden sind, dass sich ihre Referenzspannung ständig ändert, was zur Folge hat, dass auch die zum Schalten erforderliche Spannung entsprechend nachgeführt werden muss. Die Erfindung ermöglicht somit den Einsatz von kostengünstigen P-dotierten Halbleitern auf der High-Side des Wechselrichters, was darüber hinaus die Ansteuerung dieser elektronischen Schalter erheblich erleichtert, da keine Spannungsnachführung für die Schaltspannung erforderlich ist. Dies gilt in gleicher Weise für den Schalter des Buck-Boost-Converters, weshalb es von besonderem Vorteil ist, wenn dieser elektronische Schalter des Buck-Boost-Converters auf einer Seite des Zwischenkreises und die üblicherweise im Buck-Boost-Converter angeordnete Buck-Boost-Diode auf der anderen Seite des Zwischenkreises angeordnet ist. Dann nämlich ist es möglich, den Schalter auf einfache Weise mit konstanter Schaltspannung anzusteuern, wobei der Schalter bevorzugt auf der Seite des Buck-Boost-Converters liegt, der die Low-Side am Ausgang beaufschlagt, und die Diode auf der anderen Seite, also auf der Seite, welche die High-Side am Ausgang bildet. Der Steuer- und Regelkreis kann dann also für diesen Schalter ebenfalls vergleichsweise einfach aufgebaut sein.

Der Einsatz eines Buck-Boost-Converters im Zwischenkreis erscheint zunächst dann widersinnig, wenn die Spannung am Ausgang des Gleichrichters gar nicht erhöht, sondern, wenn überhaupt, nur betragsmäßig abgesenkt werden soll. Diese Spannungsabsenkung hat jedoch neben den oben erwähnten Vorteilen einen ganz wesentlichen weiteren Vorteil, der insbesondere dann zum Tragen kommt, wenn der Frequenzumrichter für Motoren kleiner Leistung, d. h. zwischen beispielsweise 50 und 300 Watt bestimmt sein soll. Werden solche Motoren für einen Frequenzumrichterbetrieb ausgelegt, d. h. als beispielsweise Dreiphasen-Asynchronmotoren gewickelt, so stößt man fertigungstechnisch aufgrund der sich dann ergebenden extrem kleinen Drahtdicken häufig auf Probleme, die mit dem erfindungsgemäßen Frequenzumrichter ebenfalls kompensiert werden können. Da aufgrund der geringeren Spannung bei Optimierung des Motors für diesen Frequenzumrichter bei gleicher Leistung ein größerer Strom fließen muss, muss auch die Drahtdicke größer gewählt werden, was in diesem besonderen Fall von Vorteil ist.

Darüber hinaus hat die Spannungsabsenkung im Zwischenkreis auch den Vorteil, dass die Bauteile im Zwischenkreis und Wechselrichter sowie auch im Steuer- und Regelkreis anstelle der sonst üblichen 400 Volt lediglich eine Durchschlagfestigkeit von beispielsweise 50 Volt aufweisen müssen, was den Einsatz kostengünstigerer und kleinerer Bauteile bedingt. So können beispielsweise auch die passiven Bauteile wie Kondensatoren, Spulen und Widerstände günstiger ausgelegt werden.

Ein weiterer Vorteil des erfindungsgemäßen Frequenzumrichters ist insbesondere aus Sicht des Motorenherstellers darin zu sehen, dass ein und dasselbe Aggregat an Netzen unterschiedlicher Versorgungsspannung und/oder -frequenz betrieben werden kann. Auch ein Betrieb an einem Gleichstromnetz ist möglich, was beispielsweise einen Einsatz in Kraftfahrzeugen oder auf Booten ermöglicht. So ist der erfindungsgemäße Frequenzumrichter bevorzugt auch in Verbindung mit einem pulsamplitudenmoduliert geregelten bürstenlosen Gleichstrommotor zum Antrieb einer Kreiselpumpe einsetzbar. Der Einsatz des in diesem Bereich eigentlich schon aus Kostengründen unüblichen Buck-Boost-Converters im Zwischenkreis hat darüber hinaus den Vorteil, dass eine kontinuierliche Leistungsabgabe des Frequenzumrichters an den Motor erfolgt, d. h. dass die sonst bei Wechselstrommotoren auftretenden Unterbrechungen in der Leistungsaufnahme beim Null-Durchgang nicht auftreten. Darüber hinaus kann der Schalter des Buck-Boost-Converters vorteilhaft auch zur Unterdrückung des Blindstromes bzw. der Blindleistung genutzt werden, was insbesondere bei Motoren kleiner Leistung heutzutage in vielen Ländern schon vorgeschrieben ist.

Die Erfindung ist nachfolgend anhand eines in der Zeichnung dargestellten Ausführungsbeispiels näher erläutert. Es zeigen:
- Fig. 1: das vereinfachte schematische Schaltbild eines Zwischenkreises nach dem Stand der Technik,
- Fig. 2: das vereinfachte schematische Schaltbild eines Zwischenkreises gemäß der Erfindung,
- Fig. 3: das vereinfachte schematische Schaltbild eines Frequenzumrichters nach dem Stand der Technik und
- Fig. 4: das vereinfachte schematische Schaltbild eines Frequenzumrichters gemäß der Erfindung.

In den Figuren sind die sich entsprechenden Bauteile/Baugruppen mit gleichen Bezugsziffern versehen, jedoch bei den Ausführungen nach dem Stand der Technik mit a und bei denen gemäß der Erfindung mit b gekennzeichnet.

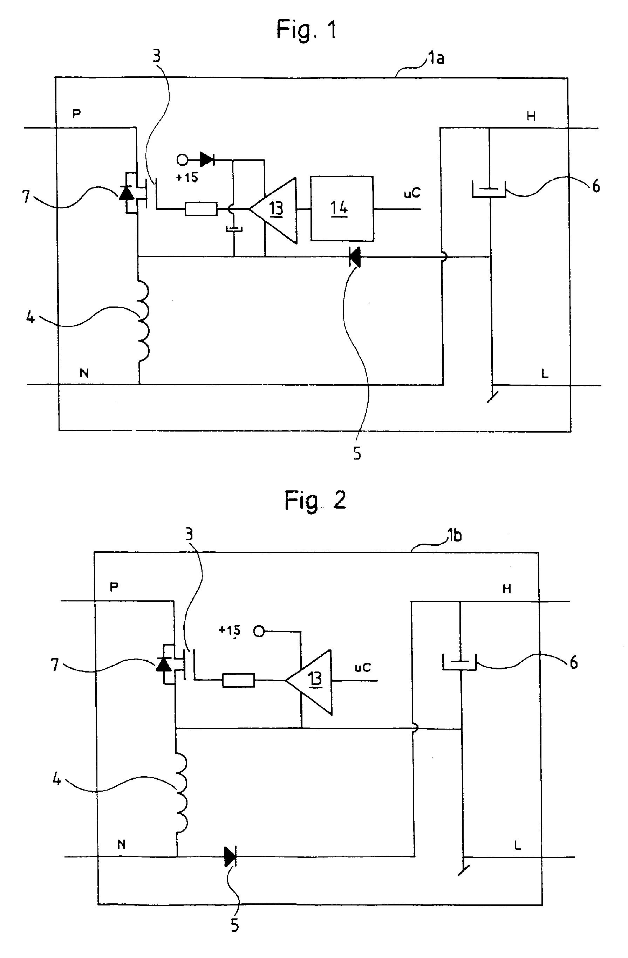

Der in Fig. 1 schematisch dargestellte Zwischenkreis 1 wird von einem Gleichrichter 2 mit einer konstanten Gleichspannung beaufschlagt. Der Eingang des Zwischenkreises 1 ist mit P (positiv) und N (negativ) gekennzeichnet. Innerhalb dieses aktiven Zwischenkreises 1 wird die am Eingang anliegende konstante Gleichspannung mittels eines Buck-Boost-Converters verändert. Ein solcher Zwischenkreis weist typischerweise einen elektronischen Schalter 3 auf, eine Induktivität 4, eine Diode 5 sowie eine Kapazität 6. Die Kapazität 6 dient dabei auch zur Pufferung der vom Motor generierten Spannungen. Wie Fig. 1 verdeutlicht, liegt bei einem Zwischenkreis, wie er aus dem Stand der Technik bekannt ist, der Schalter 3 in Reihe mit der Diode 5, d. h. auf derselben Seite des Zwischenkreises.

Bei dem Zwischenkreis gemäß der Erfindung (Fig. 2) ist hingegen vorgesehen, die Diode 5 auf der einen Seite des Zwischenkreises und den Schalter 3 auf der anderen Seite des Zwischenkreises vorzusehen. Dabei ist die Anordnung bevorzugt so, wie in Fig. 2 dargestellt, dass nämlich die Diode auf der das höhere Potential führenden Seite (High-Side) und der Schalter 3 auf der das niedrigere Potential führenden Seite (Low-Side) angeordnet ist. Dies hat erhebliche Vorteile bei der Ansteuerung des Schalters 3, da dann nämlich die Schaltspannung zum Schalten des Schalters 3 stets konstant - nämlich + 15 Volt im Ausführungsbeispiel nach Fig. 2 - ist, wohingegen sie bei einer Schaltungsanordnung gemäß Fig. 1 stets der aktuellen Spannung an der High-Side nachzuführen ist.

Die in den Figuren 1 und 2 parallel zum Schalter 3 vorgesehene Diode 7 ist grundsätzlich entbehrlich, jedoch bei den heutzutage kostengünstig verfügbaren Halbleiterbausteinen, insbesondere Siliziumbausteinen, regelmäßig vorgesehen.

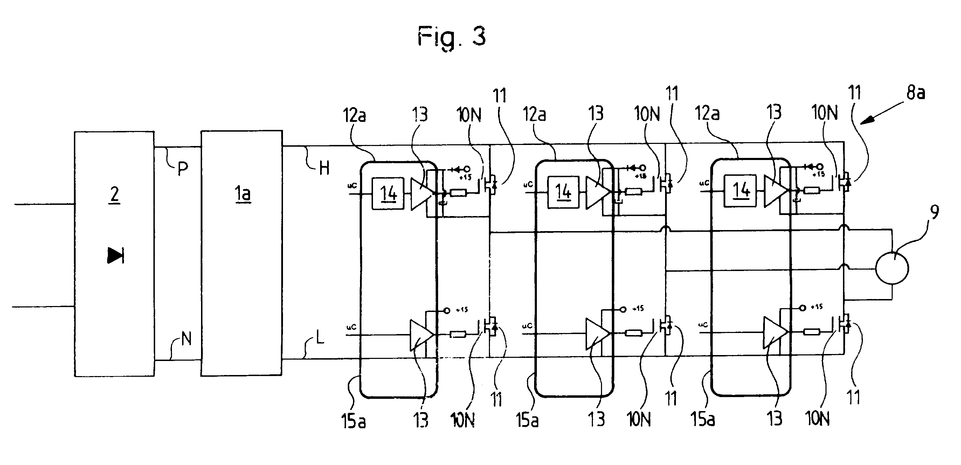

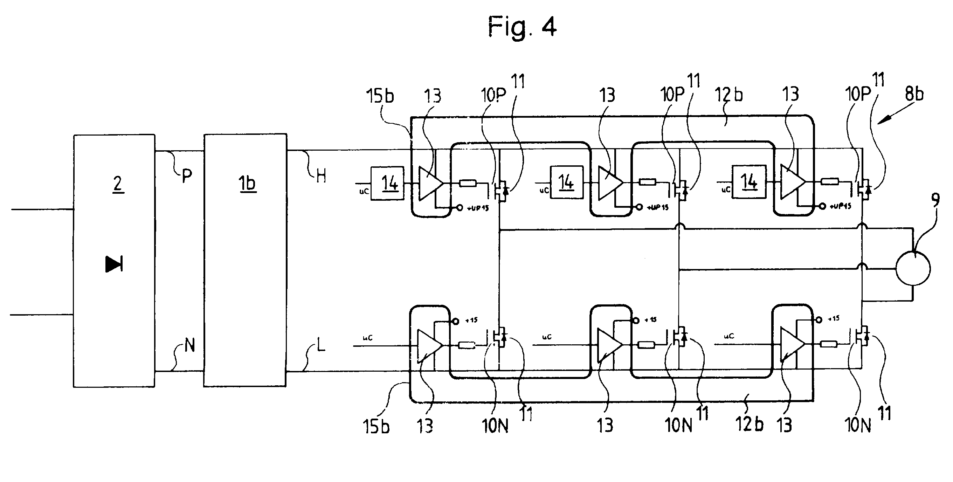

Der schaltungstechnische Aufbau eines Frequenzumrichters nach dem Stand der Technik ist anhand von Fig. 3 dargestellt, wobei dort der Zwischenkreis mit 1a, der Gleichrichter mit 2 und der Wechselrichter mit 8a gekennzeichnet ist, entsprechend in Fig. 4 jeweils mit b die sich unterscheidenden Bauteile/Baugruppen gemäß der erfindungsgemäßen Ausführung.

Bei dem Frequenzumrichter gemäß Fig. 3 wird die am Eingang des Gleichrichters 2 anliegende Versorgungsspannung in eine Gleichspannung umgewandelt, die am Eingang des Zwischenkreises 1a anliegt, wobei P die positive und N die negative Seite darstellen. Innerhalb des Zwischenkreises 1a (Einzelheiten siehe Fig. 1) wird eine betragsmäßig veränderliche Gleichspannung erzeugt, die dem Wechselrichter 8a zugeführt wird, dabei ist die das höhere Potential aufweisende Seite mit H (High-Side) und die das niedrigere Potential aufweisende Seite mit L (Low-Side) gekennzeichnet. Der Wechselrichter 8a ist zur Ansteuerung eines Drehstrommotors 9 vorgesehen, wobei jeder Phase des Motors zwei elektronische Schalter 10 zugeordnet sind, von denen jeweils einer für die Schaltung des höheren Potentials H und einer für die Schaltung des niedrigeren Potentials L zur Verbindung mit der jeweiligen Motorphase vorgesehen ist. Die Schalter 10 sind durchgängig mit 10N oder 10P bezeichnet, wobei 10N für N-dotierten Halbleiter, insbesondere Transistor und 10P für P-dotierten Halbleiter, insbesondere Transistor steht. Jedem Schalter 10 ist eine Freilaufdiode 11 parallel geschaltet. Die Steuerung dieser Schalter 10 erfolgt genau wie die des Schalters 3 im Zwischenkreis über den hier nicht im Einzelnen dargestellten Steuer- und Regelkreis 12a, der je nach Bauart aus Siliziumbausteinen einerseits und diskreten Bauelementen andererseits aufgebaut ist. Jedem Schalter ist ein Verstärker 13 zugeordnet, wobei den Verstärkern ggf. noch ein Umsetzer 14 zugeordnet ist, wie es beispielsweise bei den auf der High-Side des Umrichters 8a angeordneten Verstärkern sowie auch bei dem Verstärker im Zwischenkreis 1a gemäß Fig. 1 vorgesehen ist.

Der Frequenzumrichter gemäß der Erfindung nach Fig. 4 unterscheidet sich von der vorbeschriebenen Ausführung nach dem Stand der Technik zunächst dadurch, dass der Zwischenkreis 1b gemäß Fig. 2 ausgebildet ist, sowie darüber hinaus dadurch, dass auf der High-Side des Wechselrichters 8b P-dotierte Schalter 10P angeordnet sind. Auch hier ist jedem Schalter 10 ein Verstärker 13 und auf der High-Side zusätzlich ein Umsetzer 14 zugeordnet, die ebenfalls Teil eines Steuer- und Regelkreises 12b sind und zu denen auch ein Verstärker 13 im Zwischenkreis 1b gehört, allerdings im Unterschied zum Zwischenkreis 1a nach dem Stand der Technik ist dort kein Umsetzer 14 erforderlich.

Während bei der Ausführung nach dem Stand der Technik jeweils zwei Verstärker 13, nämlich einer auf der High-Side und einer auf der Low-Side sowie ein Umsetzer 14 in einen Siliziumbaustein 15a integriert sind, werden bei der erfindungsgemäßen Ausführung gemäß Fig. 4 sämtliche Verstärker 13 auf der High-Side durch einen gemeinsamen Siliziumbaustein 15b und sämtliche Verstärker 13 auf der Low-Side durch einen gemeinsamen Siliziumbaustein 15b gebildet. Da derartige Siliziumbausteine, wie sie heutzutage handelsüblich sind, üblicherweise sechs Verstärker beinhalten, kann die erfindungsgemäße Steuer- und Regeleinheit 12b mit zwei solcher Siliziumbausteine 15b aufgebaut werden, nämlich einem für die Low-Side und einem für die High-Side, wobei der im Zwischenkreis 1b vorgesehene Verstärker 13 ebenfalls durch einen dieser beiden Siliziumbausteine 15b gebildet sein kann. Die Umsetzer 14 hingegen sind bei der erfindungsgemäßen Ausführung als diskrete Bauteile außerhalb der Siliziumbausteine 1 5b ausgeführt, was ebenfalls von Vorteil ist. Vergleicht man dies mit einem Frequenzumrichter nach dem Stand der Technik gemäß Fig. 3, so ist festzustellen, dass dieser vier Siliziumbausteine 15a benötigt (drei für die Umrichtersteuerung und einen für die Zwischenkreissteuerung), wobei diese Siliziumbausteine 15a vergleichsweise teuer und groß bauend sind, da sie unterschiedliche Potentiale, nämlich die der Low-Side und die der High-Side in ein und demselben Baustein verarbeiten müssen, was isolationstechnisch aufwendig ist. Bei der Erfindung hingegen hat jeder Siliziumbaustein nur ein und dasselbe Potential zu verarbeiten, große Potentialdifferenzen werden also vermieden.

### Bezugszeichenliste

- a -: Stand der Technik
- b -: Erfindung

- 1 -: Zwischenkreis
- 2 -: Gleichrichter
- 3 -: Schalter
- 4 -: Induktivität
- 5 -: Diode
- 6 -: Kapazität
- 7 -: Diode
- 8 -: Wechselrichter
- 9 -: Motor
- 10 -: Elektronischer Schalter von 8
- 11 -: Freilaufdiode
- 12 -: Steuer- und Regelkreis
- 13 -: Verstärker
- 14 -: Umsetzer
- 15 -: Siliziumbaustein

## Patentansprüche

1. Frequenzumrichter für einen Elektromotor mit einem Gleichrichter (2), mit einem Zwischenkreis (1b), mit einem Wechselrichter (8b) und mit einem Steuer- und Regelkreis (12b), wobei im Wechselrichter (8b) jeder Motorphase mindestens zwei elektronische Schalter (10) zugeordnet sind, einer (10P) für die das höhere Potential führende Seite (H) und einer (10N) für die das niedrigere Potential führende Seite (L) des Wechselrichters (8b), und mit einem im Zwischenkreis (1b) vorgesehenen Buck-Boost-Converter, dadurch gekennzeichnet, dass der Zwischenkreis (1b) so gesteuert ist, dass die Spannung am Ausgang des Zwischenkreises betragsmäßig stets kleiner als die am Eingang ist.

2. Frequenzumrichter nach Anspruch 1, dadurch gekennzeichnet, dass der Wechselrichter (8b) auf der das höhere Potential führenden Seite (H) mit P-dotierten Halbleitern (10P) und auf der das niedrigere Potential führenden Seite (L) mit N-dotierten Halbleitern (10N) als elektronische Schalter ausgestattet ist.

3. Frequenzumrichter nach Anspruch 1 oder 2, dadurch gekennzeichnet, daß der Buck-Boost-Converter mindestens eine Buck-Boost-Gleichrichterdiode (5) und einen elektronischen Schalter (3) aufweist, wobei die Diode und der elektronische Schalter des Buck-Boost-Converters in unterschiedlichen Seiten des Zwischenkreises (1b) liegen.

4. Frequenzumrichter nach einem der vorhergehenden Ansprüche, dadurch gekennzeichnet, dass die Spannung am Ausgang des Zwischenkreises zwischen 30 und 70 Volt, vorzugsweise 50 Volt, beträgt bei einer Leistung des Frequenzumrichters zwischen 50 und 300 Watt.

5. Verwendung eines Frequenzumrichters nach einem der vorhergehenden Ansprüche zur Ansteuerung eines PAM-geregelten bürstenlosen Gleichstrommotors zum Antrieb einer Kreiselpumpe.
